# EUROPEAN PATENT APPLICATION

(11) **EP 3 800 724 A1**
(43) Date of publication of application: **07.04.2021**
(21) Application number: 19201394.4
(22) Date of filing: 04.10.2019
(51) Int. Cl.: H01M 10/42, H01M 10/48, H01M 10/613, H01M 10/625, H01M 10/633, H01M 10/6564

(54) **BATTERY COOLING SYSTEM FOR AN AIRCRAFT**

(71) Applicant: Siemens Aktiengesellschaft, 80333 München (DE)
(72) Inventor: Dudás, Péter, 3300 Eger (HU); Lorincz, Daniel, 1046 Budapest (HU); Handler, Balazs, 1104 Budapest (HU); Balazs, Gergely György, 1034 Budapest (HU); Debreceni, Tibor, 1125 Budapest6 (HU)
(74) Representative: Maier, Daniel Oliver

(57) **Abstract**

Battery cooling system (1) for an aircraft, comprising
a cooling source means (10) with a cooling medium (11),
a multiplicity of battery cells (20) with a cooling line means (31-34) supporting the cooling of the multiplicity of battery cells (20),
a valve (41-44) for controlling the flow of the cooling medium (11) from the cooling source means (10) into the cooling line means (31-34), and
a battery management device (50), which is configured to control the valve (41-44),
wherein the cooling medium (11) at the cooling source means (10) is a pressurized gas.

## Description

The invention relates to a battery cooling system for an aircraft, comprising a cooling source means with a cooling medium, a multiplicity of battery cells with a cooling line means supporting the cooling of the multiplicity of battery cells, a valve for controlling the flow of the cooling medium from the cooling source means into the cooling line means, and a battery management device, which is configured to control the valve.

In aviation, in particular in electrical aviation, battery cooling is a critical problem which can affect for instance battery safety, performance or lifespan.

Several measures are often necessary to provide an adequate battery cooling, which would lead to a certain amount of weight and space, which mostly is not desired in aviation. Moreover, installing such a high-performance cooling system in an aircraft is basically not feasible. From safety point of view, overtemperature in batteries can cause fire on board or a battery shutdown, even detected only at one single point. Besides, uneven temperature distribution may result in shorter battery lifespan.

The problem to be solved is to provide an effective cooling system for a battery in an aircraft environment.

The problem of the invention is solved by a battery cooling system according to the preamble of claim 1, wherein the cooling medium at the cooling source means is a pressurized gas.

It is recognized that during take-off, missed approach and fly-around there is a very high-power demand compared to cruising at flight altitude. Thus, the demand for high cooling performance is intermittent. In other words, during a mission profile there is no need for a constant cooling power.

Moreover, the demand of cooling can be precalculated at flight planning similar to the planning of energy consumption for the flight.

Thus, a synergistic effect is observable when combining the battery cooling system with pressurized gas for the operation of an aircraft.

The expansion of a not ideal gas as the cooling medium can extract a high amount of heat from its environment in a very short time.

As ideal gas in physics and physical chemistry a certain idealized model of a real gas in named, in which a large number of particles in disordered motion. Interactions of the particles are considered only with hard, elastic impacts with each other and with the walls. Although this model is a great simplification, it allows many thermodynamic processes of gases to be understood and described mathematically.

Moreover, such a cooling solution provides a predetermined cooling capacity, which can be precisely controlled at operation and the cooling power can be varied in a much larger scale than in case of other active cooling solutions known in the art.

For controlling the cooling power, the valves open and close with a certain frequency. The time while they are open can be different according to the cooling needs. As for the control, the valves can be regulated by different algorithms.

In a further development of the invention the cooling medium is pressurized CO₂ or N₂, which are highly efficient for cooling and well suited at aviation applications.

In this context, "pressurized" means an operational pressure of the gas e.g. within a cartridge or a gas bottle of over 10 bar, preferably over 100 bar and more preferably over 200 bar.

In a further development of the invention the battery cooling system comprises at least two cooling source means with preferably different cooling media and at least two valves for controlling the flow of the respective cooling medium from the respective cooling source means into the common cooling line means.

Thus, a combined system for cooling as well as fire distinguishing of the battery cells is provided, which allows by a synergic effect saving overall weight and enables a lower system complexity. The fire distinguishing system can be controlled by the battery management device, for instance using adequate sensing means for determining between cooling and fire distinguishing.

In a further development of the invention the aircraft is an aircraft with at least partly an electric propulsion means, which can be for instance a propeller engine.

Thus, a synergistic effect is observable when combining the battery cooling system for batteries supplying the electric propulsion with pressurized gas for the operation of an electric aircraft, since the energy consumption of the electric propulsion requires an adequate battery capacity and thus, the impact on the aforesaid improvements is significantly high. In other words, the advantageous effect achieved by the invention is specifically high, since the battery cooling system according to the invention provides a significant saving in weight and space.

In a further development of the invention, the battery cooling system comprises further a sensor means, which is configured to measure at least one sensor value regarding the properties of at least one battery cell the multiplicity of battery cells, wherein the battery management device is configured to control the valve through the at least one sensor value.

Thus, concentrated cooling is achievable when controlling the valves according to sensor values. Unbalanced decreasing of state of health inside a battery pack can be prevented and weak spots in the cell matrix of the multiplicity of battery cells can be reduced.

In a further development of the invention, the battery cooling system comprises further a flight control device, which is configured to capture the flight mode of the aircraft, wherein the battery management device is configured to control the valve through the flight mode of the aircraft.

Thus, the amount of quantity of cooling gas can be minimized and system weight can be further reduced.

In a further development of the invention, the battery cooling system comprises further a flight mode estimation device, which is configured to estimate the flight mode of the aircraft for a succeeding predefined time period, wherein the battery management device is configured to control the valve through the estimated flight mode of the aircraft, preferably by means of machine learning.

Thus, the amount of quantity of cooling gas can be further minimized and system weight can be further reduced.

In a further development of the invention the sensor means comprises a fire detector sensor and the sensor value is a fire detector value related to the multiplicity of battery cells, and the battery management device is configured to control the valve to an open state in the case that the fire detector value exceeds a predefined limit, and open state of the valve let an amount of pressurized gas flowing through, which amount is related to the fire detector value and sufficient to extinguish the fire.

Thus, it is possible to stop a single or multicell cell thermal runaway, which could cause fire onboard the aircraft.

The problem of the invention is also solved by an aircraft, comprising a battery cooling system according to the invention.

The problem of the invention is also solved by an aircraft with an electric propulsion, comprising a battery cooling system according to the invention, wherein the electric battery voltage of a battery module with the multiplicity of battery cells of the battery cooling system is connected to drive the electric propulsion of the aircraft.

All combinations of further developments of the invention are explicitly suggested to be combined, and further synergistic effect can be achieved.

The invention will be explained in more detail with reference to an embodiment shown in the accompanying drawings. In the drawings show:
Fig. 1 a schematic overview of an aircraft with a battery cooling system according to the invention,
Fig. 2 a block diagram with an embodiment of the invention.

It is clear, that further not shown parts are necessary for the operation of the battery cooling system, e.g. mounting parts, power supply or electronic control components. For the sake of better understanding these parts are not illustrated and described.

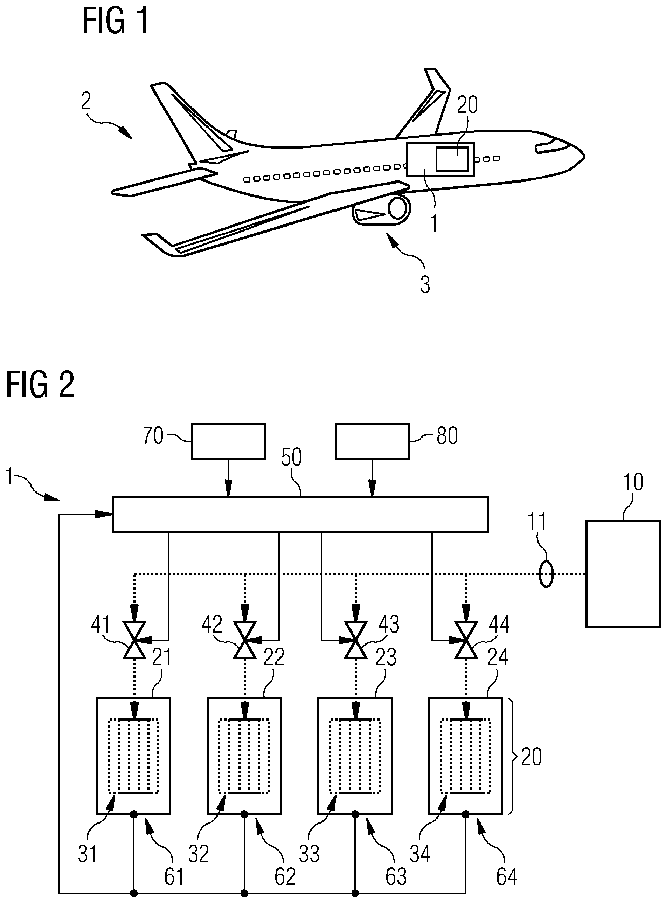

**Fig. 1** shows a preferred embodiment of the invention with a battery cooling system 1 and an aircraft 2 with an electric propulsion 3. The battery cooling system 1 comprises a multiplicity of battery cells 20.

The aircraft 2 is equipped with an electric propulsion 3 and a battery cooling system 1 according to the invention, wherein the electric battery voltage of a battery module with a multiplicity of battery cells of the battery cooling system 1 is connected to drive the electric propulsion 3.

In an alternative, not shown embodiment, the aircraft can comprise a conventional propulsion and a battery cooling system according to the invention.

**Fig. 2** shows an embodiment of the invention with the battery cooling system 1.

The battery cooling system 1 for the aircraft 2 comprises a cooling source means 10 with a cooling medium 11.

The cooling source means 10 can be for instance a gas bottle.

The battery cooling system 1 comprises further a multiplicity of battery cells 20 with four cells and respective four cooling line means 31-34 supporting the cooling of the multiplicity of battery cells 20.

The multiplicity of battery cells 20 of the battery cooling system 1 define a battery module, which provides an electric battery voltage to an electric load.

The cooling line means 31-34 can be for instance a fixed or flexible pipe or pipe network with dispatchers and with respective outlets at the ends or along the pipes. For instance, an elastic or solid 3D structure with channels, made of plastics or metal, can also constitute the cooling line means 31-34. The outlets can have a shape which supports a uniform distribution of cooling medium 11 to the battery cells 21-24. This aspect is not shown in the figures.

Moreover, the battery cooling system 1 comprises four valves 41-44 for controlling the flow of the cooling medium 11 in the cooling line means 31-34 from the cooling source means 10.

The battery cooling system 1 comprises further a battery management device 50, which is configured to control the valves 41-44 individually.

The cooling medium 11 at the cooling source means 10 is a pressurized gas, e.g. pressurized CO2 or N2.

In one further embodiment, by the presence of two independent cooling source means the cooling medium distributed within the battery cell arrangement can be controlled by the respective valves, which can be controlled by the battery cooling system. Thus, the battery cooling system can distinguish between different cooling media or alternatively a cooling medium and a fire extinguishing medium as discussed further below. Furthermore, also a mixture of the cooling media of the two cooling source means can be provided controlled by the two respective valves.

The aircraft 2 is an aircraft with an electric propulsion means, e.g. a propeller.

The battery cooling system can further comprise a respective sensor means 61-64, which is configured to measure at least one sensor value regarding the properties of the battery cells 21-24 of the multiplicity of battery cells 20.

The properties of the battery cells 21-24 can be for instance temperature, pressure or voltage.

It is advantageously if adequate sensor means are mounted in proximity of the battery cells 21-24 as well as in proximity of outlets of the cooling pipe 31-34.

A thermodynamic model comprising the arrangement of the battery cells 21-24 and the outlets of the cooling pipe 31-34 can support an estimation of a thermal distribution within the battery module based on thermal measurements at the battery cells 21-24 and preferably additionally at the outlets of the cooling pipe 31-34.

The thermal distribution of the battery cells 21-24 can be estimated better, if each battery cells 21-24 is monitored at least by one respective sensor means 61-64.

The thermal control of the battery cells by the battery management can be improved, if each battery is monitored at least by two respective sensor means, at least one at each battery cell and at least one at each outlet of the cooling pipe.

The thermodynamic model can be based on a machine learning model and can be calculated by the battery management device 50.

The battery management device 50 is configured to control the valve 41-44 through the at least one sensor value.

Moreover, the battery cooling system 1 comprises a flight control device 70, which is configured to capture the flight mode of the aircraft 2.

The battery management device 50 is configured to control the valve 41-44 through the flight mode of the aircraft 2.

Moreover, the battery cooling system 1 comprises a flight mode estimation device 80, which is configured to estimate the flight mode of the aircraft 2 for a succeeding predefined time period, e.g. within the next 5, 15 or 30 minutes.

The battery management device 50 is configured to control the valve 41-44 through the estimated flight mode of the aircraft, preferably by means of machine learning. The estimation can consider e.g. the location of the airport the aircraft is departing, the proposed flight envelope and/or outside temperatures.

In this example, the sensor means 61-64 comprise a respective fire detector sensor and the sensor value is a fire detector value related to the multiplicity of battery cells 20.

A fire detector sensor can be based on the principle of photo electric detection of scattered light or the detection of exceeding a predefined CO concentration.

The battery management device 50 is configured to control the valve 41-44 to an open state in the case that the fire detector value exceeds a predefined limit. IN general, the valve 41-44 can provide an open versus a closed state, but in an alternative embodiment also a analog opening size with a smoothly variable flow throughput.

At the open state of the valve 41-44 let an amount of pressurized gas flowing through, which amount is related to the fire detector value and enough to extinguish the fire.

The invention is not restricted to the specific embodiments described in detail herein, but encompasses all variants, combinations and modifications thereof that fall within the framework of the appended claims.

In the figures is not explicitly shown that, preferably, the battery cells 20 can be arranged within a sealed housing with an emergency pressure value.

Moreover, also not shown, the sealed housing can comprise one or more controllable release valves for controlled releasing warmed gas out of the housing. The control mechanism of the controllable release valve can be performed by the battery management device 50. The sealed housing can be under pressure caused by previous cooling procedures and thus, a warmed gas release can be executed just by opening the release valve.

### List of reference numerals:

- 1: Battery cooling system
- 2: aircraft
- 3: propulsion of aircraft
- 10: cooling source means
- 11: cooling medium
- 20: multiplicity of battery cells
- 21-24: battery cells
- 31-34: cooling line means
- 41-44: valve
- 50: battery management device
- 61-64: sensor means
- 70: flight control device
- 80: flight mode estimation device

## Claims

1. Battery cooling system (1) for an aircraft (2), comprising
a cooling source means (10) with a cooling medium (11),
a multiplicity of battery cells (20) with a cooling line means (31-34) supporting the cooling of the multiplicity of battery cells (20),
a valve (41-44) for controlling the flow of the cooling medium (11) from the cooling source means (10) into the cooling line means (31-34), and
a battery management device (50), which is configured to control the valve (41-44),
**characterized in that** the cooling medium (11) at the cooling source means (10) is a pressurized gas.

2. Battery cooling system (1) according to the preceding claim, wherein the cooling medium (11) is pressurized CO2 or N2.

3. Battery cooling system (1) according to one of the preceding claims, comprising at least two cooling source means with preferably different cooling media and at least two valves for controlling the flow of the respective cooling medium (11) from the cooling source means (10) into the cooling line means (31-34).

4. Battery cooling system (1) according to one of the preceding claims, wherein the aircraft (2) is an aircraft with at least partly an electric propulsion means.

5. Battery cooling system (1) according to one of the preceding claims, comprising further
a sensor means (61-64), which is configured to measure at least one sensor value regarding the properties of at least one battery cell (21-24) the multiplicity of battery cells (20),
wherein the battery management device (50) is configured to control the valve (41-44) through the at least one sensor value.

6. Battery cooling system (1) according to one of the preceding claims, comprising further
a flight control device (70), which is configured to capture the flight mode of the aircraft (2),
wherein the battery management (50) device is configured to control the valve (41-44) through the flight mode of the aircraft (2).

7. Battery cooling system (1) according to the preceding claim, comprising further
a flight mode estimation device (80), which is configured to estimate the flight mode of the aircraft (2) for a succeeding predefined time period,
wherein the battery management device (50) is configured to control the valve (41-44) through the estimated flight mode of the aircraft, preferably by means of machine learning.

8. Battery cooling system (1) according to one of the preceding claims, wherein
the sensor means (61-64) comprises a fire detector sensor and the sensor value is a fire detector value related to the multiplicity of battery cells (20),
and the battery management device (50) is configured to control the valve (41-44) to an open state in the case that the fire detector value exceeds a predefined limit,
and the open state of the valve (41-44) let an amount of pressurized gas flowing through, which amount is related to the fire detector value.

9. Aircraft (2), comprising a battery cooling system (1) according to one of the preceding claims.

10. Aircraft (2) with an electric propulsion (3), comprising a battery cooling system (1) according to one of the claims 1 to 9, wherein the electric battery voltage of a battery module with the multiplicity of battery cells (20) of the battery cooling system (10) is connected to drive the electric propulsion (3) of the aircraft (2).
